# EUROPÄISCHE PATENTANMELDUNG

(11) **EP 0 643 281 A2**
(43) Veröffentlichungstag der Anmeldung: **15.03.1995**
(21) Anmeldenummer: 94113215.1
(22) Anmeldetag: 24.08.1994
(51) Int. Cl.: G01B 7/02, G01B 7/08

(54) **Einrichtung zum kapazitiven Prüfen eines Messobjekts, insbesondere eines Zylinders aus keramischem Kernbrennstoff**

(30) Priorität: 02.09.1993 DE 4329713
(71) Anmelder: SIEMENS AKTIENGESELLSCHAFT, D-80333 München (DE)
(72) Erfinder: Peehs, Martin, Dr., D-91088 Bubenreuth (DE); Mollwitz, Klaus, D-91054 Erlangen (DE)

(57) **Zusammenfassung**

Eine Einrichtung zum kapazitiven Prüfen eines Meßobjekts (4) hat zur Fertigstellung eines Unterdurchmessers an allen Stellen der Mantelfläche des Meßobjekts (4) zwei Sensorpaare. Jedes Sensorpaar hat zwei sich geradlinig gegenüber befindliche Sensoren (9), die elektrische Kondensatoren sind. Das elektrische Feld dieser Kondensatoren greift in einem Aufnahmekanal (3) für das Meßobjekt (4). Der Aufnahmekanal (3) ist zwischen den Sensoren (9) jedes der beiden Sensorpaare angeordnet. Diese Sensorpaare haben in bezug auf den Aufnahmekanal (3) einen Winkelabstand voneinander.

## Beschreibung

Die Erfindung betrifft eine Einrichtung zum kapazitiven Prüfen eines Meßobjekts entsprechend dem Oberbegriff des Patentanspruchs 1.

Eine derartige Einrichtung ist aus dem Prospekt 227104/04.88 der Firma Mikro-Epsilon-Meßtechnik, D-8359 Ortenburg-Dorfbach bekannt. Meßobjekt einer solchen bekannten Einrichtung kann z.B. ein Band sein, dessen Dicke bestimmt wird. Auch können Durchmesser, Zentrierung und Verschleiß von Meßobjekten bestimmt werden.

Der Erfindung liegt die Aufgabe zugrunde, das Prüfspektrum einer solchen Einrichtung zu erweitern.

Zur Lösung dieser Aufgabe hat eine Einrichtung der eingangs erwähnten Art erfindungsgemäß die Merkmale des kennzeichnenden Teils des Patentanspruchs 1.

Auf diese Weise gelingt es, an allen Stellen der Mantelfläche des Meßobjekts Unterdurchmesser festzustellen, die z.B. durch Abplatzen von Werkstoff an der Mantelfläche des Meßobjekts entstanden sein können. Ein Drehen des Meßobjekts oder der beiden Sensorpaare etwa um eine durch die Längsrichtung des Aufnahmekanals bestimmte Drehachse ist nicht erforderlich.

Patentanspruch 2 ist auf eine Weiterbildung der erfindungsgemäßen Einrichtung gerichtet,die besonders vorteilhaft ist, wenn Durchmesser und Umfang des Meßobjekts verhältnismäßig gering sind.

Die Erfindung und ihre Vorteile seien anhand der Zeichnung an einem Ausführungsbeispiel näher erläutert:
Figur 1 zeigt schematisch eine Draufsicht auf eine erfindungsgemäße Einrichtung.
Figur 2 zeigt eine Stirnseite eines zur Einrichtung nach Figur 1 gehörenden Hohlzylinders.
Figur 3 zeigt schematisch teilweise im Längsschnitt einen Sensor der Einrichtung nach Figur 1.

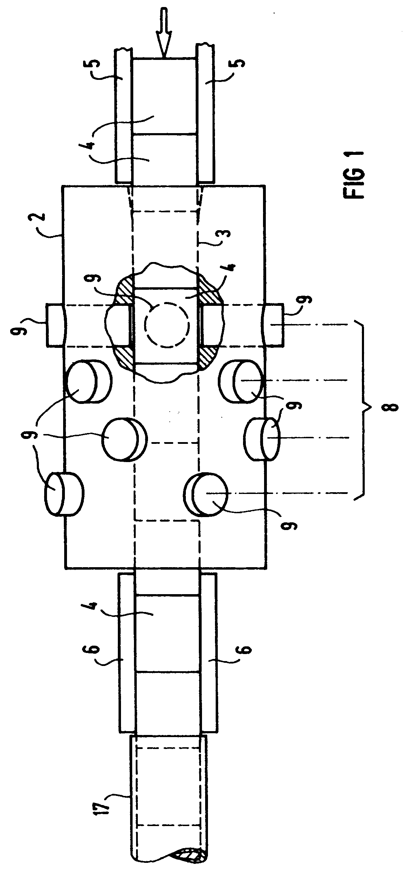

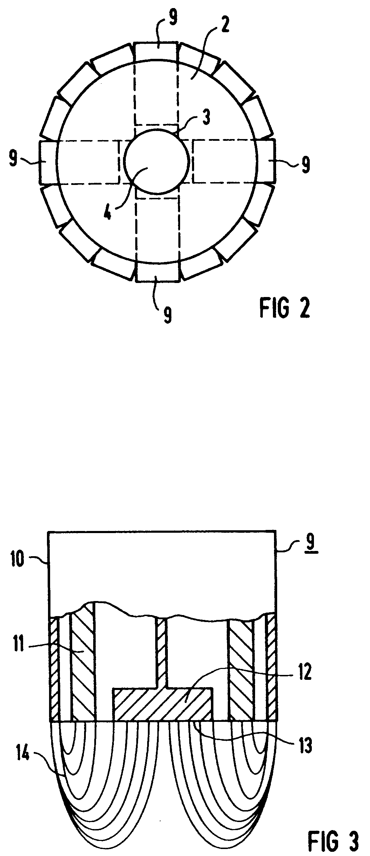

Die Einrichtung nach Figur 1 und 2 weist einen Hohlzylinder 2 aus Edelstahl auf, der mit waagerechter Zylinderlängsachse angeordnet ist und einen in Figur 1 gestrichelt angedeuteten, zur Zylinderlängsachse koaxialen Aufnahmekanal 3 für Meßobjekte 4 bildet.

Die Meßobjekte 4 sind Vollzylinder beispielsweise aus gesintertem UO₂, welches ein keramischer Werkstoff ist. Diese aus Vollzylindern bestehenden Meßobjekte sind mit fluchtenden, waagerechten Zylinderachsen nebeneinander Stirnfläche an Stirnfläche liegend angeordnet und bilden so eine Säule, die in Längsrichtung durch den Aufnahmekanal 3 des Hohlzylinders 2 hindurchgeschoben wird. Vor der Eintritts- und der Austrittsöffnung des Aufnahmekanals 3 im Hohlzylinderr 2 ist jeweils eine Auflageplatte mit Führungsleisten 5 und 6 für die Meßobjekte 4 vorgesehen. Die Auflageplatte mit den Führungsleisten 6 vor der Austrittsöffnung des Aufnahmekanals 3 im Kohlzylinder 2 fuhrt zur Öffnung am Ende eines Hüllrohrs 7 aus einer Zirkoniumlegierung, in die die Meßobjekte 4 (Vollzylinder aus Kernbrennstoff) nach dem Durchqueren des Aufnahmekanals 3 im Hohlzylinder 2 hineingeschoben werden. Nach dem Auffüllen des Hüllrohrs 7 wird dieses an beiden Enden mit einem Stopfen aus einer Zirkoniumlegierung verschlossen, der mit dem Hüllrohr 4 jeweils verschweißt wird.

Dieses verschlossene Hüllrohr stellt dann einen Brennstab für ein Kernreaktorbrennelement dar.

In Figur 1 sind vier Querschnittsebenen 8 des Hohlzylinders 2 angedeutet, zu denen der Aufnahmekanal 3 rechtwinklig ist und die jeweils voneinander gleichen Abstand haben.

In jeder der Querschnittsebenen 8 sind jeweils vier Sensoren 9 radial am Hohlzylinder 2 angeordnet, die bis zum Aufnahmekanal 3 reichen und in den Querschnittsebenen 8 jeweils voneinander einen Winkelabstand von jeweils 90° in bezug auf dessen Aufnahmekanal 3 haben. Das bedeutet, daß in jeder Querschnittsebene 8 jeweils zwei Sensoren 9 ein Sensorpaar bilden, dessen Sensoren sich geradlinig jeweils auf einem Durchmesser der Meßobjekte 4 gegenüber befinden und zwischen dessen Sensoren 9 auch der Aufnahmekanal 3 angeordnet ist. Die beiden Sensorpaare in einer der Querschnittsebenen 8 haben von den beiden Sensorpaaren in jeder der anderen Querschnittsebenen 8 einen anderen Winkelabstand in bezug auf den Aufnahmekanal 3. Im vorliegenden Fall beträgt dieser Winkelabstand 22,5°, 45° oder 67,5°.

Wie Figur 3 zeigt, sind die Sensoren 9 Schutzringkondensatoren. Innerhalb eines Gehäuses 10 ist eine hohlzylinderförmige Schirmelektrode 11 angeordnet, in der sich koaxial eine massive zylinderförmige Meßelektrode 12 befindet. Die Höhe der Meßelektrode 12 in Achsrichtung ist erheblich geringer als die Höhe der Schirmelektrode 11 ebenfalls in Achsrichtung. Ein Querschnitt 13 des Sensors 9 erfäßt sowohl die Schirmelektrode 11 als auch die Meßelektrode 12. Dieser Querschnitt bildet die Stirnfläche der Sensoren 9, die dem Aufnahmekanal 3 im Hohlzylinder 2 und damit den Meßobjekten 4 in diesem Aufnahmekanal 3 zugewandt ist.

Die Sensoren 9 werden mit Wechselstrom gespeist, und ein zwischen Schirmelektrode 11 und Außenelektrode 12 einerseits und Gehäuse 10 andererseits ausgebildetes elektrisches Feld 14 greift am Querschnitt 13 der Sensoren 9 in den Aufnahmekanal 3. Auf ihrem Weg in das Hüllrohr 7 durch den Aufnahmekanal 3 im Hohlzylinder 2 hindurch werden die aus Vollzylindern aus UO₂ bestehenden Meßobjekte 4 an allen Sensoren 9 vorbeibewegt. Das bedeutet, daß eine elektronische Auswerteinrichtung, an der die Sensoren 9 angeschlossen sind, feststellen kann, ob eines der Meßobjekte 4 Abplatzungen an der Oberfläche und insbesondere an seiner Mantelfläche hat. Sollte ein solches Meßobjekt 4 mit Abplatzungen an der Oberfläche festgestellt werden, kann entweder das Befüllen des Hüllrohrs 7 unterbrochen und das nicht einwandfreie Meßobjekt 4 ausgetauscht werden, oder das Hüllrohr 7 wird zwar fertig befüllt, dann aber an den Enden nicht verschlossen, so daß alle in ihm befindliche Meßobjekte 4 wieder aus dem Hüllrohr 7 entfernt werden können. Dieses Hüllrohr 7 steht für eine erneute Befüllung wieder zur Verfügung, während aus den dem Hüllrohr 7 entnommenen Meßobjekten 4 das nicht einwandfreie Meßobjekt 4 ausgesondert werden kann. Die anderen Meßobjekte 4 stehen ebenfalls wieder zum Einfüllen in ein Hüllrohr 7 zur Verfügung.

## Patentansprüche

1. Einrichtung zum kapazitiven Prüfen eines Meßobjekts (4),insbesondere eines Zylinders aus keramischem Kernbrennstoff, mit einem Aufnahmekanal (3) für das Meßobjekt (4) und mit einem ersten Sensorpaar, zwischen dessen sich geradlinig gegenüber befindlichen Sensoren (9) der Aufnahmekanal (3) angeordnet ist und dessen Sensoren (9) elektrische Kondensatoren sind, deren elektrisches Feld in den Aufnahemkanal (3) greift,
**dadurch gekennzeichnet,** daß ein zweites Sensorenpaar vorhanden ist, zwischen dessen sich geradlinig gegenüber befindlichen Sensoren (9) der Aufnahmekanal (3) angeordnet ist, dessen Sensoren (9) ebenfalls elektrische Kondensatoren sind und das in bezug auf den Aufnahmekanal (3) einen Winkelabstand vom ersten Sensorpaar hat.

2. Einrichtung nach Anspruch 1,
**dadurch gekennzeichnet,** daß sich das erste Sensorpaar in einer ersten Ebene (8) und das zweite Sensorpaar in einer zweiten Ebene (8) befindet, daß der Aufnahmekanal (3) rechtwinklig zu diesen beiden Ebenen (8) verlauft und daß beide Ebenen (8) Abstand voneinander haben.
